# EUROPEAN PATENT SPECIFICATION

(11) **EP 4 212 419 B1**
(45) Date of publication and mention of the grant of the patent: **19.06.2024**
(21) Application number: 22212498.4
(22) Date of filing: 09.12.2022
(51) Int. Cl.: B62J 9/14, B62J 35/00

(54) **STRADDLED VEHICLE**
GRÄTSCHSITZFAHRZEUG
VÉHICULE À SELLE

(30) Priority: 13.01.2022 JP 2022003972; 28.09.2022 JP 2022155255
(43) Date of publication of application: 19.07.2023
(73) Proprietor: Yamaha Hatsudoki Kabushiki Kaisha, Iwata-shi, Shizuoka 438-8501 (JP)
(72) Inventor: Nguyenvan, Phu, Iwata-shi, Shizuoka-ken (JP); Fujiwara, Yu, Iwata-shi, Shizuoka-ken (JP); Shimizu, Kenta, Iwata-shi, Shizuoka-ken (JP)
(74) Representative: Grünecker Patent- und Rechtsanwälte PartG mbB

(56) References cited:
- EP-A1- 2 180 544
- EP-A1- 2 679 476
- WO-A1-2021/199615
- JP-A- 2013 060 082
- JP-A- 2013 067 222
- JP-B2- 4 905 288

## Description

The present invention relates to a straddled vehicle according to the preamble of independent claim 1. Such a vehicle can be taken from the JP 2013-67222 A.

There has been known a straddled vehicle including an internal combustion engine, a housing box disposed above the internal combustion engine, a fuel tank disposed rearward of the housing box, and a seat disposed above the housing box and the fuel tank. The housing box houses articles such as a helmet. A front end portion of the seat is rotatably connected to a vehicle body by a hinge. The seat has a seat lock mechanism that locks the seat to the vehicle body. When the seat lock mechanism is unlocked and the seat is rotated upward, the housing box is opened upward.

The straddled vehicle includes various electric components. JP 2013-67222 A, for example, discloses a mobile terminal serving as an electric component and connected to a battery of a straddled vehicle through a charging cord. The mobile terminal is disposed under a seat.

The seat is locked by a seat lock mechanism except for when the seat is rotated upward to open a housing box. Thus, a theft of an electric component can be prevented by disposing the electric component under the seat. When the seat lock mechanism is unlocked and the seat is rotated upward, a user can easily access the electric component.

In the straddled vehicle described above, the housing box, the fuel tank, the electric component, and the seat lock mechanism are disposed under the seat. To secure installation space for the fuel tank, the capacity of the housing box is limited to some extent.

As shown in FIG. 3 of JP 2013-67222 A, in a case where the electric component is disposed in the housing box, the housing box needs to have a hole through which an electric wire passes. However, if the housing box has such a hole, dirt or the like might enter the housing box through the hole. In addition, the electric wire passing through the hole is partially located in the housing box, and this electric wire needs to be protected against an article housed in the housing box. If the housing box has an additional structure for protecting the electric wire, the capacity of the housing box decreases. The addition of a structure for preventing dirt through the hole also reduces the capacity of the housing box.

The fuel tank is disposed rearward of the housing box. In a case where an electric component is disposed forward of the fuel tank, the dimension of the housing in the front-rear direction needs to be reduced in order to secure installation space for the electric component. In this case, the capacity of the housing box decreases.

In a case where the seat lock mechanism is disposed forward of the fuel tank, the dimension of the housing box in the front-rear direction needs to be reduced in order to secure installation space for the seat lock mechanism. In this case, the capacity of the housing box decreases.

As shown in FIG. 3 of JP 2013-67222 A, to avoid a decrease in the capacity of the housing box, it is conceivable to use dead space of a battery housing box under the housing box as housing space. The space under the housing box, however, is not easy to access. In addition, the inside of the housing box and the inside of the battery housing box under the housing box are closed space. The internal combustion engine is disposed below the housing box and the battery housing box, and the inside of the housing box and the inside of the battery housing box are closed space. Thus, ambient temperatures in the boxes tend to increase. Accordingly, a housed article might be affected by heat of the internal combustion engine.

It is therefore an object of the present teaching to provide a straddled vehicle that can easily prevent a theft of an electric component, has easy access to an electric component, and easily secures a capacity of a housing box. According to the present invention said object is solved by a straddled vehicle having the features of independent claim 1. Preferred embodiments are laid down in the dependent claims.

A straddled vehicle disclosed here includes: an internal combustion engine; a housing box disposed above the internal combustion engine; a fuel tank disposed rearward of the housing box; a seat having a front end portion and disposed above the housing box and the fuel tank; a hinge connected to the front end portion of the seat and supporting the seat such that the seat is rotatable between a closed position in which the seat extends rearward and an open position in which the seat extends upward; a seat lock mechanism configured to lock the seat in the closed position; a tank cover disposed under the seat and above the fuel tank; and an electric component disposed below the seat and supported by the tank cover. The seat lock mechanism is disposed rearward of an intermediate position of the fuel tank in a front-rear direction of the fuel tank. The electric component is disposed outside the housing box and rearward of a front end of the fuel tank. At least a portion of the electric component is located forward or rearward of the seat lock mechanism.

In the straddled vehicle, since the seat is locked in the closed position by the seat lock mechanism, a user cannot access the electric component disposed under the seat unless the seat lock mechanism is unlocked. Thus, a theft of the electric component can be easily prevented. On the other hand, when the seat lock mechanism is unlocked and the seat is rotated to the open position, the user can easily access the electric component. In the straddled vehicle, the electric component is disposed rearward of the front end of the fuel tank. Since the electric component is disposed close to a rider at a relatively rearward position, the rider can easily access the electric component. In addition, since the electric component is located relatively far from the internal combustion engine, the electric component is less likely to be affected by heat of the internal combustion engine.

In the straddled vehicle, since the seat lock mechanism is disposed rearward of the intermediate position of the fuel tank in the front-rear direction, the size of the housing box does not need to be reduced in order to secure installation space of the seat lock mechanism. Thus, the capacity of the housing box can be easily secured.

In addition, in the straddled vehicle, since the electric component is disposed outside the housing box, the housing box does not need to have a hole through which an electric component passes. Thus, it is possible to prevent dirt and the like from entering the housing box. A portion of the electric wire does not need to be disposed in the housing box. The inside of the housing box does not need to have an additional structure for preventing dirt from entering from the hole and/or a structure for protecting the electric wire. Thus, the capacity of the housing box can be easily secured.

The fuel tank may have a filler opening that is open upward. The tank cover may have a cover opening located above the filler opening. The tank cover may have a partition wall disposed between the cover opening and the electric component and projecting upward.

In supplying fuel to the fuel tank from the filler opening, fuel might be spilled to a periphery of the cover opening of the tank cover. The spilled fuel might flow over the surface of the tank cover and reaches electric components. However, the structure described above can prevent fuel spilled around the cover opening by using the partition wall.

The electric component may be disposed rearward of the filler opening. The electric component may be disposed leftward or rightward of the filler opening.

The electric component may overlap the fuel tank in a vehicle plan view.

In the structure described above, since the electric component does not project from the fuel tank in the front-rear direction and in the left-right direction, dimensions of the under-seat portion of the straddled vehicle in the front-rear direction and the left-right direction can be reduced.

A lower end of the electric component may be located below an upper end of the fuel tank.

In this structure, as compared to a case where the entire electric component is disposed above the fuel tank, dimensions of the under-seat portions of the straddled vehicle in the top-bottom direction can be reduced.

The straddled vehicle may include a cross member disposed above a portion of the fuel tank and extending in vehicle left-right directions. The seat lock mechanism may be disposed rearward of a front end of the cross member. The electric component may be disposed above the cross member.

The electric component may overlap the cross member in a vehicle plan view.

The type of the electric component is not specifically limited. The electric component may be a communication unit communicable with a mobile terminal wirelessly.

The straddled vehicle may include an electric component cover equipped with the electric component. The tank cover may have a fitting portion in which the electric component cover is detachably fitted.

With the structure described above, the electric component can be easily attached to the tank cover by fitting the component cover in the fitting portion of the tank cover. The electric component can also be easily detached from the tank cover by detaching the electric component cover from the fitting portion of the tank cover. Thus, the electric component can be easily attached and detached.

The electric component may be provided with a two-dimensional code. The electric component cover may have a hole surrounding at least a portion of a periphery of the two-dimensional code.

The structure described above enables a user to read the two-dimensional code provided on the electric component through the hole of the electric component cover. Thus, the two-dimensional code can be read without detachment of the electric component from the electric component cover.

### Advantages of Invention

The present teaching can provide a straddled vehicle that can easily prevent a theft of an electric component, has easy access to an electric component, and easily obtains a capacity of a housing box.

### BRIEF DESCRIPTION OF THE DRAWINGS

FIG. 1 is a left side view of a motorcycle according to a preferred embodiment.
FIG. 2 is a plan view of the motorcycle.
FIG. 3 is a cross-sectional view of a seat and an under-seat portion of the motorcycle.
FIG. 4 is a plan view of the under-seat portion.
FIG. 5 is a partially enlarged cross-sectional view of the seat and the under-seat portion of the motorcycle.
FIG. 6 is a partially enlarged view of the under-seat portion while the seat is in an open position.
FIG. 7 is a partial plan view of the under-seat portion when an electric component cover is detached.
FIG. 8 is a perspective view of the electric component cover and a communication unit when seen from below.
FIG. 9 is a plan view of an under-seat portion according to another preferred embodiment.

### DESCRIPTION OF EMBODIMENTS

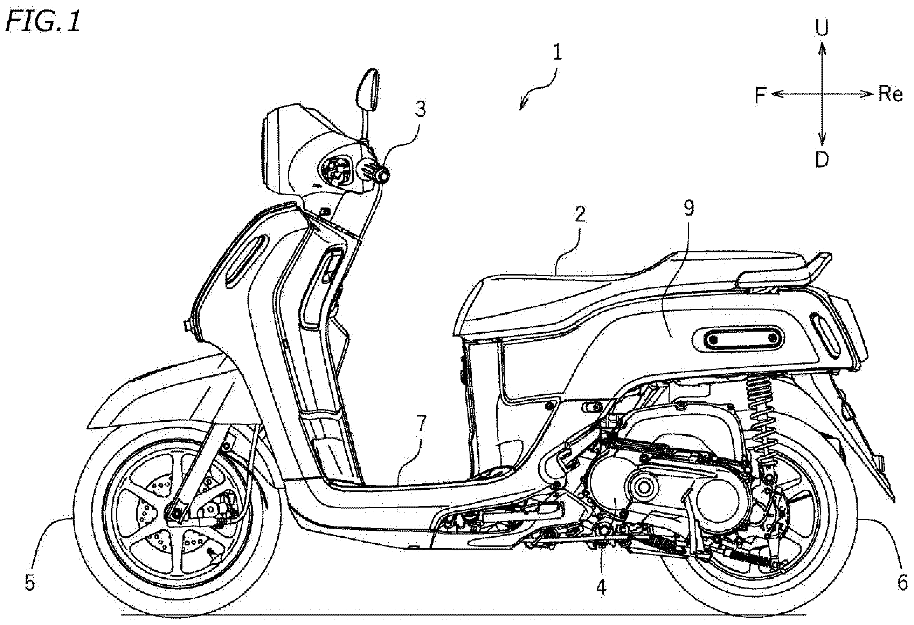

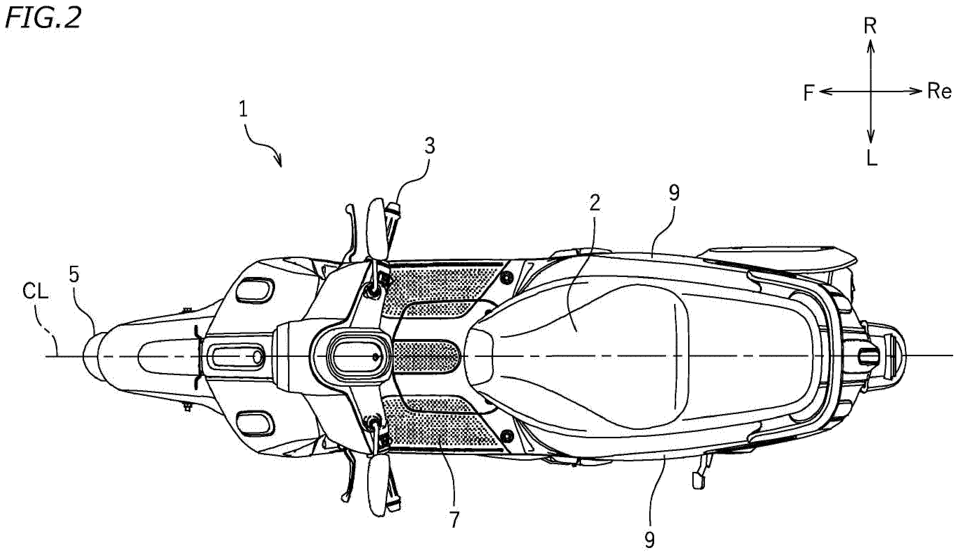

A preferred embodiment will be described hereinafter with reference to the drawings. FIG. 1 is a left side view of a motorcycle 1 as an example of a straddled vehicle. FIG. 2 is a plan view of the motorcycle 1. The motorcycle 1 described below is a scooter. It should be noted that the motorcycle 1 is not limited to the scooter.

Unless otherwise specified, front, rear, left, right, up, and down as used in the description below refer to front, rear, left, right, up, and down, respectively, as seen from an imaginary passenger sitting on a seat 2 in a case where the motorcycle 1 on which no passenger sits and no load is mounted is stationary in an upright position on a horizontal plane. Characters F, Re, L, R, U, and D in the drawings represent front, rear, left, right, up, and down, respectively.

Forward includes not only a direction extending horizontally forward along a vehicle center line CL but also a direction inclined from this forward direction at an angle less than 90 degrees, unless otherwise specified. Rearward includes not only a direction extending horizontally rearward along the vehicle center line CL but also a direction inclined from this rearward direction at an angle less than 90 degrees. The front-rear direction of the vehicle referrers to the indication F-Re in the figures. Leftward includes not only a direction extending horizontally leftward along a line orthogonal to the vehicle center line CL but also a direction inclined from this leftward direction at an angle less than 90 degrees. Rightward includes not only a direction extending horizontally rightward along the line orthogonal to the vehicle center line CL but also a direction inclined from this rightward direction at an angle less than 90 degrees. The left-right direction of the vehicle referrers to the indication L-R in the figures. Upward includes not only a direction extending upward along a vertical line but also a direction inclined from this upward direction at an angle less than 90 degrees. Downward includes not only a direction extending downward along the vertical line but also a direction inclined from this downward direction at an angle less than 90 degrees. The up-down direction of the vehicle referrers to the indication U-D in the figures.

As illustrated in FIG. 1, the motorcycle 1 includes a seat 2 on which a rider sits, a handlebar 3, an internal combustion engine (hereinafter referred to as an engine) 4, a front wheel 5, a rear wheel 6, a footrest 7, and a body cover 9. The seat 2 is disposed above and rearward of the footrest 7.

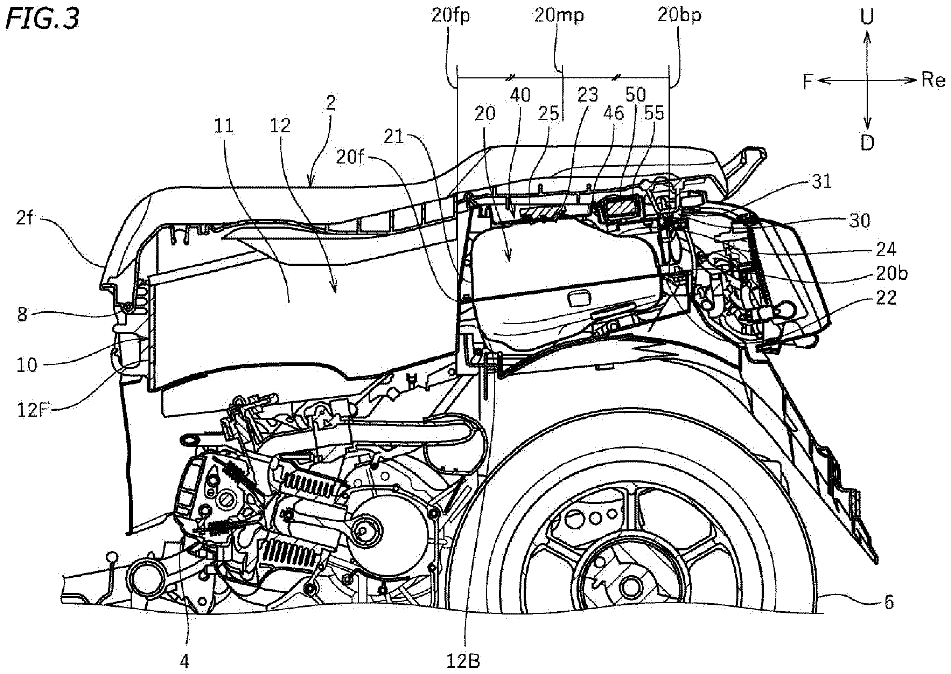

FIG. 3 is a cross-sectional view illustrating the seat 2 and a group of parts under the seat 2. The group of parts under the seat 2 will be hereinafter referred to as an "under-seat portion." As illustrated in FIG. 3, the motorcycle 1 includes a housing box 10, a fuel tank 20, a hinge 8, a seat lock mechanism 30, a tank cover 40, and a communication unit 50 as an example of an electric component. The housing box 10, the fuel tank 20, the seat lock mechanism 30, the tank cover 40, and the communication unit 50 are disposed under the seat 2.

The hinge 8 is connected to a front end portion 2f of the seat 2. The hinge 8 rotatably supports the seat 2. The seat 2 is rotatable between a closed position in which the seat 2 extends rearward from the hinge 8 and an open position in which the seat 2 extends upward from the hinge 8. FIG. 3 illustrates a state where the seat 2 is in the closed position. Unless otherwise specified in the following description, positions of components refer to positions while the seat 2 is in the closed position.

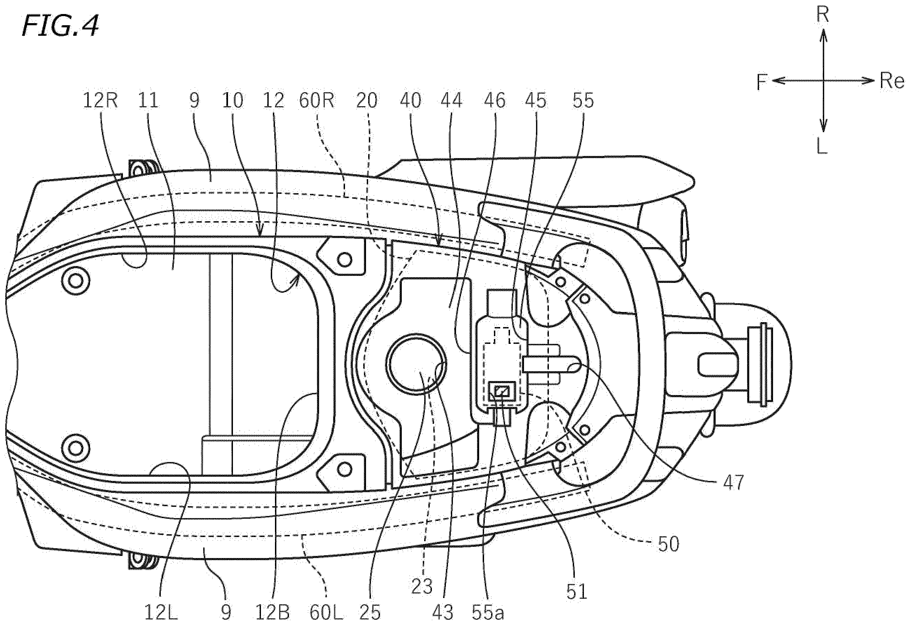

The housing box 10 is disposed above the engine 4. The housing box 10 is open upward. While the seat 2 is in the closed position, the housing box 10 is closed by the seat 2. While the seat 2 is in the open position, the housing box 10 is open upward. FIG. 4 is a plan view of the under-seat portion. The housing box 10 has a housing portion 12 defining a housing space 11 in which an article such as a helmet is housed. The housing portion 12 includes a front wall 12F (see FIG. 3), a rear wall 12B, a left wall 12L, and a right wall 12R respectively defining a front side, a rear side, a left side, and a right side of the housing space 11.

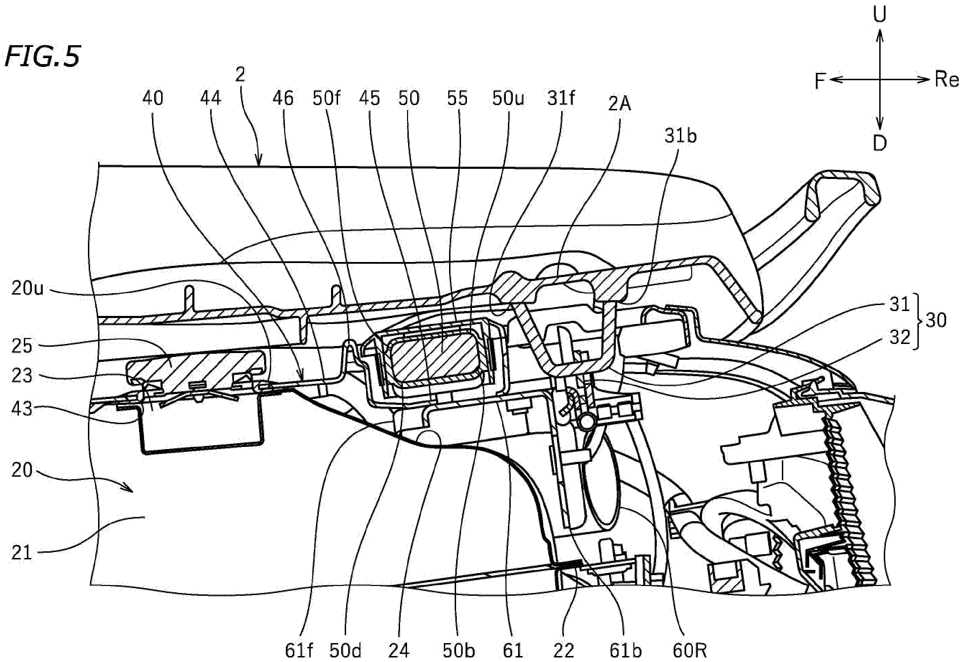

As illustrated in FIG. 3, the fuel tank 20 is disposed rearward of the housing box 10. The fuel tank 20 is disposed above the engine 4. The fuel tank 20 is disposed above the rear wheel 6. The fuel tank 20 includes a tank body 21, a flange 22 disposed around the tank body 21, and a filler opening 23 formed in an upper portion of the tank body 21. The filler opening 23 is open upward. FIG. 5 is an enlarged view of a portion of FIG. 3. As illustrated in FIG. 5, a downward recess 24 is formed rearward of the filler opening 23 of the tank body 21. The recess 24 extends rearward and downward from the filler opening 23.

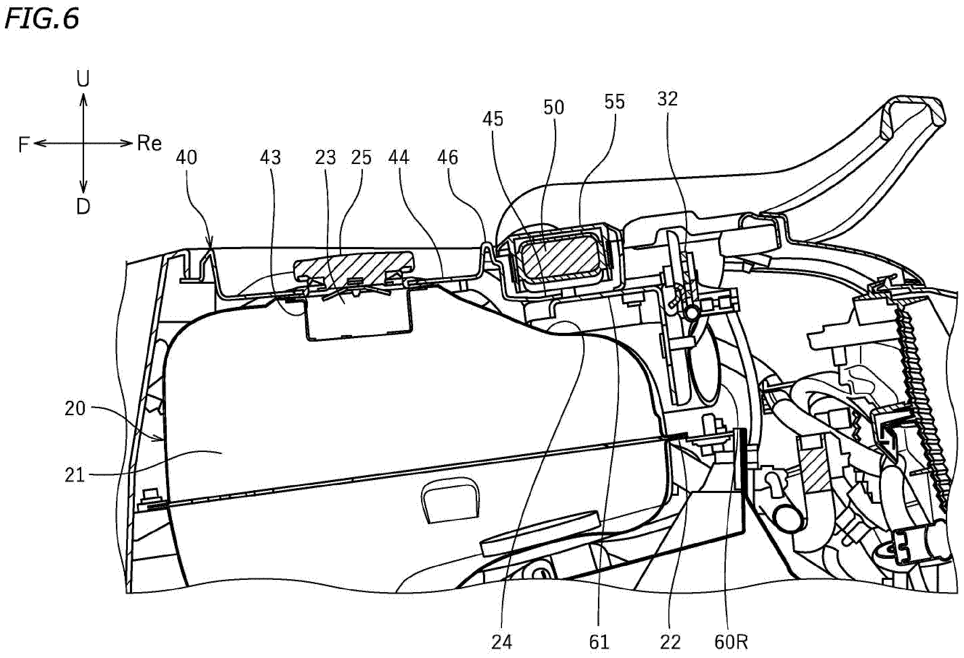

FIG. 6 is a partially enlarged view of the under-seat portion while the seat 2 is in the open position. As illustrated in FIG. 6, the tank cover 40 is fixed to the fuel tank 20. The tank cover 40 is disposed above the fuel tank 20. The tank cover 40 has a cover opening 43 located above the filler opening 23. The filler opening 23 is open upward through the cover opening 43. An oil filler cap 25 is detachably fitted in the filler opening 23 and the cover opening 43.

In FIG. 3, a line 20fp is a vertical line passing through a front end 20f of the fuel tank 20, and a line 20bp is a vertical line passing through a rear end 20b of the fuel tank 20. A line 20mp is a vertical line located at the middle between the line 20fp and the line 20bp. The line 20mp represents an intermediate position of the fuel tank 20 in the front-rear direction. As illustrated in FIG. 3, the seat lock mechanism 30 is disposed rearward of the intermediate position of the fuel tank 20 in the front-rear direction. The seat lock mechanism 30 may be any lock mechanism conventionally used for locking a seat of a straddled vehicle. In this preferred embodiment, as illustrated in FIG. 5, the seat lock mechanism 30 includes a striker 31 fixed to a base plate 2A of the seat 2, and an engagement nail 32 to be engaged with the striker 31. The engagement nail 32 is movable by an operation of a user between a lock position in which the engagement nail 32 is engaged with the striker 31 and an unlock position in which the engagement nail 32 is separated from the striker 31.

As described above, FIG. 4 is a plan view of the under-seat portion. Although FIG. 4 does not show the seat 2, when the seat 2 is moved to the open position, the housing box 10 and the tank cover 40 are exposed. The communication unit 50 is supported by the tank cover 40. Specifically, the communication unit 50 is attached to an electric component cover 55, and the electric component cover 55 is attached to the tank cover 40.

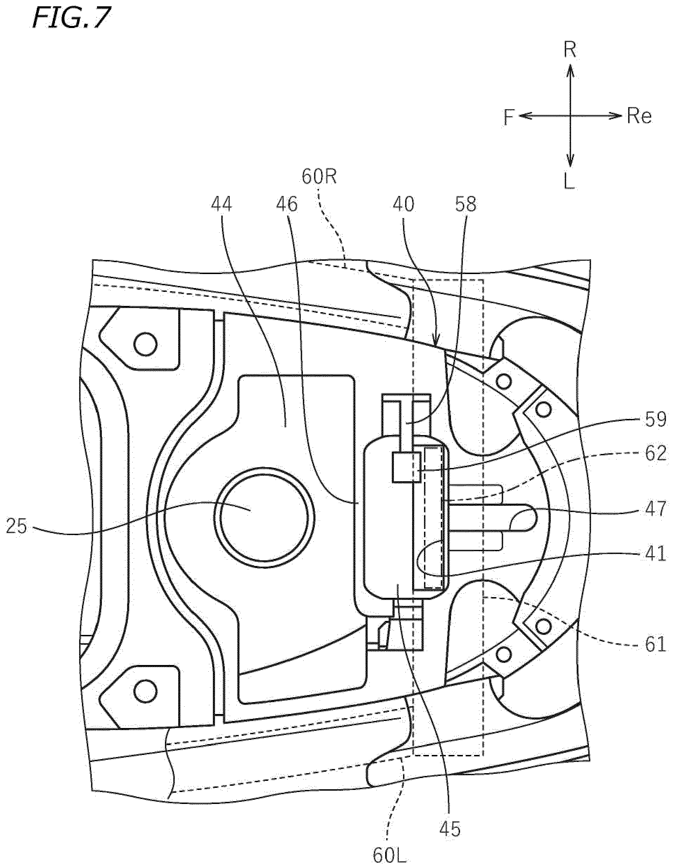

FIG. 7 is a partial plan view of the under-seat portion when the electric component cover 55 is detached. As illustrated in FIG. 7, the tank cover 40 has a fitting portion 45 in which the electric component cover 55 is detachably fitted. Although the structure of the fitting portion 45 is not specifically limited, the fitting portion 45 is formed by a downward recess in this preferred embodiment.

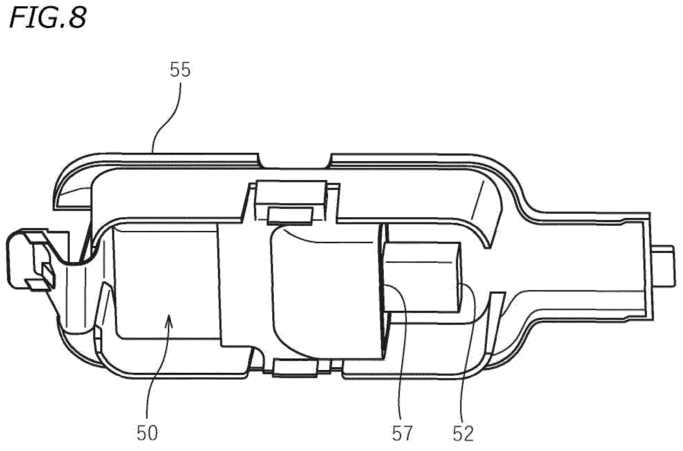

FIG. 8 is a perspective view of the electric component cover 55 and the communication unit 50 when seen from below. The communication unit 50 is attached to the electric component cover 55 with a band 57. The structure for attaching the communication unit 50 to the electric component cover 55 is not specifically limited. The communication unit 50 may be directly attached to the electric component cover 55 without intervention of other members such as the band 57.

The communication unit 50 is connected to a control unit (not show) of the motorcycle 1. The control unit is connected to a wire harness 58 (see FIG. 7). A connector 59 is connected to the wire harness 58. As illustrated in FIG. 8, the communication unit 50 includes a connection port 52 configured to be detachably attached to the connector 59. By connecting the connection port 52 to the connector 59, the communication unit 50 is connected to the control unit through the wire harness 58. The communication unit 50 can communicate with the control unit by wire through the wire harness 58.

The communication unit 50 can also communicate with a mobile terminal such as a smartphone wirelessly. A communication method between the communication unit 50 and the mobile terminal is not specifically limited, and a Bluetooth (registered trademark) can be preferably used, for example. As illustrated in FIG. 4, a two-dimensional code 51 such as a QR code (registered trademark) is provided on the upper surface of the communication unit 50. The electric component cover 55 has a hole 55a surrounding the two-dimensional code 51. Although the communication unit 50 is covered with the electric component cover 55, the two-dimensional code 51 can be seen through the hole 55a. For example, the communication unit 50 and the mobile terminal can be easily paired by reading the two-dimensional code 51 of the communication unit 50 with a camera of the mobile terminal.

As illustrated in FIG. 3, the communication unit 50 is disposed outside the housing box 10. The communication unit 50 is disposed outside the housing portion 12 of the housing box 10. The communication unit 50 is disposed rearward of the housing portion 12 of the housing box 10. The communication unit 50 is disposed rearward of the rear wall 12B of the housing portion 12. The communication unit 50 is disposed rearward of the rear end of the housing portion 12. The communication unit 50 is disposed rearward of the front end 20f of the fuel tank 20. In this preferred embodiment, the communication unit 50 is disposed rearward of the filler opening 23 of the fuel tank 20. At least a portion of the communication unit 50 is disposed forward of the seat lock mechanism 30. In this preferred embodiment, the entire communication unit 50 is disposed forward of the seat lock mechanism 30. As illustrated in FIG. 5, the communication unit 50 is disposed forward of the striker 31 of the seat lock mechanism 30.

As illustrated in FIGS. 4 and 6, the recess 44 is formed around the cover opening 43 of the tank cover 40. In supplying fuel to the fuel tank 20 from the filler opening 23, fuel might be spilled to a periphery of the filler opening 23 (i.e., around the cover opening 43). The spilled fuel is collected in the recess 44. As illustrated in FIG. 6, the tank cover 40 includes a partition wall 46 disposed between the recess 44 and the fitting portion 45. The partition wall 46 projects upward. Thus, the partition wall 46 prevents fuel collected in the recess 44 from flowing into the fitting portion 45. It is possible to prevent fuel adhesion to the electric component cover 55 fitted in the fitting portion 45 and the communication unit 50 attached to the electric component cover 55. In this preferred embodiment, the bottom surface of the recess 44 extends forward and downward, and tilts from the horizontal plane. Accordingly, fuel collected in the recess 44 is less likely to flow rearward. This structure also prevents fuel adhesion to the electric component cover 55 and the communication unit 50.

As illustrated in FIG. 4, a hole 47 through which the striker 31 of the seat lock mechanism 30 passes is formed rearward of the fitting portion 45 of the tank cover 40. In this preferred embodiment, the electric component 50 is disposed between the cover opening 43 and the hole 47.

As illustrated in FIG. 4, the motorcycle 1 includes left and right seat frames 60L and 60R supporting the seat 2. The seat frames 60L and 60R extend rearward. The left seat frame 60L is disposed leftward of the housing box 10 and the fuel tank 20. The right seat frame 60R is disposed rightward of the housing box 10 and the fuel tank 20. As illustrated in FIG. 7, a cross member 61 extending in the vehicle left-right directions is connected to the left seat frame 60L and the right seat frame 60R.

An identification display 62 for identifying the motorcycle 1 is inscribed in the upper surface of the cross member 61. The identification display 62 is, for example, characters and/or symbols representing a chassis number. The tank cover 40 has a hole 41 surrounding the identification display 62. As illustrated in FIG. 7, when the electric component cover 55 is detached, the identification display 62 can be seen through the hole 41. A user can see the identification display 62 inscribed in the cross member 61 before the electric component cover 55 is attached or by detaching the electric component cover 55.

As illustrated in FIG. 5, the cross member 61 is disposed above a portion of the fuel tank 20. In this preferred embodiment, the cross member 61 is disposed above the recess 24 of the fuel tank 20. A portion of the cross member 61 is disposed directly above the recess 24 of the fuel tank 20. A position directly above the recess 24 herein is a position above the recess 24 and overlapping the recess 24 when seen in a vehicle plan view.

The striker 31 of the seat lock mechanism 30 is disposed above the cross member 61. The seat lock mechanism 30 is disposed rearward of the front end 61f of the cross member 61. The front end 31f of the striker 31 is disposed rearward of the front end 61f of the cross member 61. The front end 31f of the striker 31 is disposed forward of the rear end 61b of the cross member 61. The rear end 31b of the striker 31 is disposed rearward of the rear end 61b of the cross member 61.

The communication unit 50 is disposed above the cross member 61. In a vehicle plan view, the communication unit 50 overlaps the cross member 61. The expression "overlap" herein means that two members at least partially overlap each other. The front end 50f of the communication unit 50 is disposed forward of the front end 61f of the cross member 61. The rear end 50b of the communication unit 50 is located rearward of the front end 61f of the cross member 61. The rear end 50b of the communication unit 50 is disposed forward of the rear end 61b of the cross member 61.

In this preferred embodiment, the communication unit 50 is disposed forward of the seat lock mechanism 30. An upper end 50u of the communication unit 50 is disposed below the upper end of the striker 31. In this preferred embodiment, the upper end of the striker 31 coincides with the front end 31f of the striker 31. A lower end 50d of the communication unit 50 is disposed above the lower end of the engagement nail 32. In this preferred embodiment, the upper end of the striker 31 corresponds to the upper end of the seat lock mechanism 30, and the lower end of the engagement nail 32 corresponds to the lower end of the seat lock mechanism 30. The upper end 50u of the communication unit 50 is located below the upper end of the seat lock mechanism 30, and the lower end 50d of the communication unit 50 is located above the lower end of the seat lock mechanism 30.

The configuration of the motorcycle 1 has been described above. Next, various advantages of the motorcycle 1 according to this preferred embodiment will be described.

In the motorcycle 1 according to this preferred embodiment, the seat 2 is locked in the closed position by the seat lock mechanism 30, and thus, unless the seat lock mechanism 30 is unlocked, a user cannot access the communication unit 50 disposed under the seat 2. Thus, a theft of the communication unit 50 can be easily prevented. On the other hand, when the seat lock mechanism 30 is unlocked and the seat 2 is rotated to the open position, the user can easily access the communication unit 50. In addition, in this preferred embodiment, the communication unit 50 is disposed rearward of the front end 20f of the fuel tank 20. Since the communication unit 50 is disposed close to a rider at a relatively rearward position, the rider can easily access the communication unit 50. In addition, since the communication unit 50 is located relatively far from the engine 4, the communication unit 50 is less likely to be affected by heat of the engine 4.

In this preferred embodiment, the seat lock mechanism 30 is disposed rearward of the intermediate position 20mp of the fuel tank 20 in the front-rear direction (see FIG. 3). Unlike a case where the seat lock mechanism 30 is disposed forward of the fuel tank 20, it is unnecessary to reduce the size of the housing box 10 in order to secure installation space for the seat lock mechanism 30. Thus, the presence of the seat lock mechanism 30 can secure the capacity of the housing space 11 of the housing box 10 while preventing a theft of the communication unit 50.

In the motorcycle 1 according to this preferred embodiment, the communication unit 50 is disposed outside the housing box 10. The housing box 10 does not need to have a hole through which an electric wire to be connected to the communication unit 50 passes. This can prevent dirt or the like from entering the housing box 10 through such a hole. In addition, it is also unnecessary to dispose a portion of the electric wire in the housing box 10. In this preferred embodiment, the inside of the housing box 10 needs to have none of an additional structure for preventing dirt from entering through a hole and an additional structure for protecting an electric wire. Thus, the capacity of the housing space 11 of the housing box 10 can be easily secured.

In the manner described above, this preferred embodiment can provide the motorcycle 1 that can easily prevent a theft of the communication unit 50, has easy access to the communication unit 50, and can easily secure the capacity of the housing box 10.

As described above, in supplying fuel to the fuel tank 20 from the filler opening 23, fuel might be spilled to a periphery of the cover opening 43 of the tank cover 40. The spilled fuel is collected in the recess 44 of the tank cover 40. In this preferred embodiment, the partition wall 46 projecting upward is provided between the cover opening 43 of the tank cover 40 and the communication unit 50. The communication unit 50 is separated by the partition wall 46 from the recess 44 around the cover opening 43. The partition wall 46 prevents fuel adhesion to the communication unit 50.

As illustrated in FIG. 4, the communication unit 50 overlaps the fuel tank 20 in a vehicle plan view. In this preferred embodiment, the entire communication unit 50 overlaps the fuel tank 20 in a vehicle plan view. The communication unit 50 does not extend from any of the front, rear, left, and right of the fuel tank 20. In this preferred embodiment, dimensions of the under-seat portion of the motorcycle 1 can be reduced in the front-rear directions and in the left-right directions.

As illustrated in FIG. 5, the lower end 50d of the communication unit 50 is located below the upper end 20u of the fuel tank 20. As compared to a case where the entire communication unit 50 is located above the upper end 20u of the fuel tank 20, dimensions of the under-seat portion of the motorcycle 1 in the top-bottom directions can be reduced.

In this preferred embodiment, the seat lock mechanism 30 is disposed rearward of the front end 61f of the cross member 61. The communication unit 50 is disposed above the cross member 61. The seat lock mechanism 30 and the communication unit 50 can be disposed compactly under the seat 2.

In this preferred embodiment, the communication unit 50 overlaps the cross member 61 in a vehicle plan view. As compared to a case where the communication unit 50 is disposed forward or rearward of the cross member 61, the entire dimensions of the communication unit 50 and the cross member 61 in the front-rear direction can be reduced. The dimensions of the under-seat portion of the motorcycle 1 in the front-rear direction can be reduced.

In this preferred embodiment, the downward recess 24 is formed rearward of the filler opening 23 of the fuel tank 20 (see FIG. 5). The cross member 61 and the communication unit 50 are disposed directly above the recess 24. That is, a margin for space in the top-bottom directions is provided at the rear of the filler opening 23 of the fuel tank 20. The cross member 61 and the communication unit 50 are disposed by using this space. In this preferred embodiment, the seat lock mechanism 30 and the communication unit 50 can be disposed compactly under the seat 2.

In this preferred embodiment, the communication unit 50 is attached to the electric component cover 55 (see FIG. 8). The tank cover 40 has the fitting portion 45 in which the electric component cover 55 is detachably fitted (see FIG. 7). In this preferred embodiment, the communication unit 50 can be easily attached to the tank cover 40 by fitting the electric component cover 55 in the fitting portion 45 of the tank cover 40. In addition, the communication unit 50 can be easily detached from the tank cover 40 by detaching the electric component cover 55 from the fitting portion 45 of the tank cover 40. Accordingly, the communication unit 50 can be easily attached and detached.

In this preferred embodiment, as illustrated in FIG. 4, the communication unit 50 is provided with the two-dimensional code 51. The electric component cover 55 has the hole 55a surrounding the two-dimensional code 51. A user can read the two-dimensional code 51 of the communication unit 50 through the hole 55a of the electric component cover 55 with a camera of a mobile terminal or other devices. Thus, the two-dimensional code 51 can be read without detachment of the communication unit 50 from the electric component cover 55.

The foregoing description has been directed to one preferred embodiment. However, the above preferred embodiment is merely an example, and other various preferred embodiments may be made. Next, other preferred embodiments will be briefly described. In the following description, members and portions similar to those of the preferred embodiment are denoted by the same or like reference characters, and will not be described again.

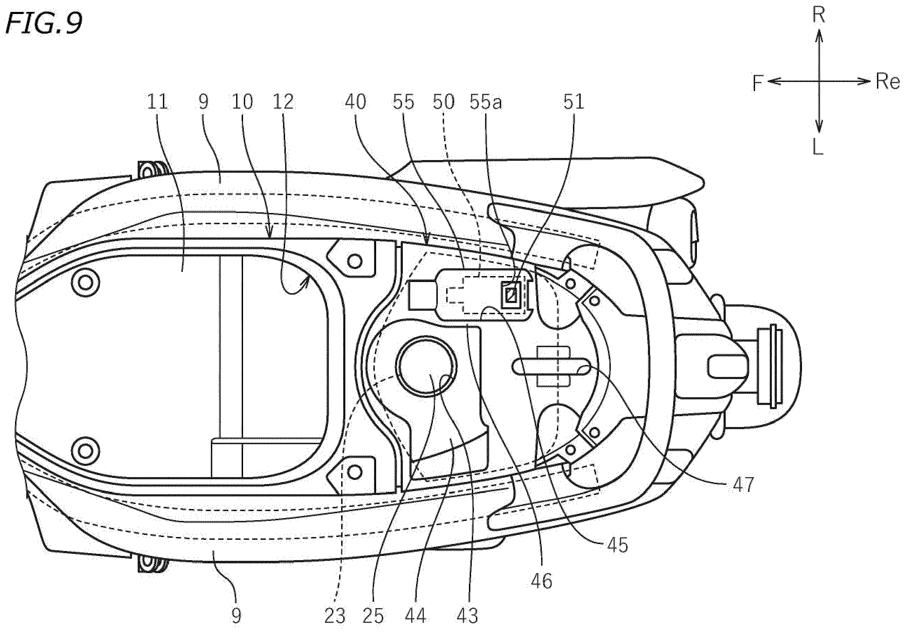

In the preferred embodiment, the communication unit 50 is disposed rearward of the filler opening 23 (see FIG. 4). However, the positional relationship between the communication unit 50 and the filler opening 23 is not specifically limited. For example, the communication unit 50 may be disposed at a side of the filler opening 23. For example, as illustrated in FIG. 9, the communication unit 50 may be disposed rightward of the filler opening 23. The communication unit 50 may be disposed leftward of the filler opening 23. In this case, the partition wall 46 projecting upward is preferably provided between the cover opening 43 of the tank cover 40 and the communication unit 50.

In the preferred embodiment, the entire communication unit 50 is disposed forward of the seat lock mechanism 30 (see FIG. 3). However, the communication unit 50 needs to be disposed around the seat lock mechanism 30, and at least a portion of the communication unit 50 needs to be disposed forward or rearward of the seat lock mechanism 30. The entire communication unit 50 does not need to be disposed forward of the seat lock mechanism 30. A portion of the communication unit 50 may be disposed leftward or rightward of the seat lock mechanism 30. A portion of the communication unit 50 may be disposed rearward of the front end of the seat lock mechanism 30 and forward of the rear end of the seat lock mechanism 30. The communication unit 50 may also be disposed rearward of the seat lock mechanism 30.

The electric component is not limited to the communication unit 50 that can communicate with a mobile terminal wirelessly. For example, the electric component may be a mobile terminal such as a smartphone.

In a case where fuel is less likely to adhere to the electric component, the partition wall 46 of the tank cover 40 may be omitted.

The electric component may not overlap the fuel tank in a vehicle plan view. The lower end of the electric component may be located at the same level or higher than the upper end of the fuel tank.

The seat lock mechanism may not be disposed rearward of the front end of the cross member. The communication unit may not be disposed above the cross member. In a vehicle plan view, the electric component may not overlap the cross member.

In the preferred embodiment, the hole 55a of the electric component cover 55 surrounds the entire periphery of the two-dimensional code 51 of the communication unit 50 (see FIG. 4). The hole 55a needs to be formed such that the two-dimensional code 51 is exposed therein, and is not limited to a specific shape and specific dimensions. The hole 55a may surround a portion of the periphery of the two-dimensional code 51. For example, the hole 55a may be open rearward in a vehicle plan view.

In the preferred embodiment, the housing box 10 and the tank cover 40 are separate components. Alternatively, the housing box 10 and the tank cover 40 may be united. In the case where the housing box 10 and the tank cover 40 are united, a portion forward of the rear end of the housing portion 12 is defined as the housing box 10.

The seat lock mechanism 30 may be disposed rearward of the fuel tank 20. The front end of the seat lock mechanism 30 may be disposed rearward of the rear end 20b of the fuel tank 20. At least a portion of the seat lock mechanism 30 may be disposed rearward of the intermediate position 20mp of the fuel tank 20 in the front-rear direction and forward of the rear end 20b of the fuel tank 20.

The straddled vehicle refers to a vehicle on which a passenger is to be astride. The straddled vehicle is not limited to the motorcycle 1. The straddled vehicle may be an electric tricycle, an all terrain vehicle (ATV), or a snowmobile, for example.

### DESCRIPTION OF REFERENCE CHARACTERS

1 motorcycle (straddled vehicle), 2 seat, 4 internal combustion engine, 8 hinge, 10 housing box, 20 fuel tank, 23 filler opening, 30 seat lock mechanism, 40 tank cover, 43 cover opening, 45 fitting portion, 46 partition wall, 50 communication unit (electric component), 51 two-dimensional code, 55 electric component cover, 55a hole, 61 cross member

## Claims

1. A straddled vehicle (1) comprising:
an internal combustion engine (4);
a housing box (10) disposed above the internal combustion engine (4) with regard to an up-down direction of the vehicle;
a fuel tank (20) disposed rearward of the housing box (10) with regard to a front-rear direction of the vehicle;
a seat (2) having a front end portion with regard to the front-rear direction of the vehicle and disposed above the housing box (10) and the fuel tank (20) with regard to the up-down direction of the vehicle;
a hinge (8) connected to the front end portion of the seat (2) and supporting the seat (2) such that the seat (2) is rotatable between a closed position in which the seat (2) extends rearward with regard to the front-rear direction of the vehicle and an open position in which the seat (2) extends upward with regard to the up-down direction of the vehicle;
a seat lock mechanism (30) configured to lock the seat (2) in the closed position;
a tank cover (40) disposed under the seat (2) and above the fuel tank (20) with regard to the up-down direction of the vehicle; and
an electric component (50) disposed below the seat (2) with regard to the up-down direction of the vehicle and supported by the tank cover (40), wherein
the electric component (50) is disposed rearward of a front end of the fuel tank (20) with regard to the front-rear direction of the vehicle, and
at least a portion of the electric component (50) is located forward or rearward of the seat lock mechanism (30) with regard to the front-rear direction of the vehicle, **characterized in that** the seat lock mechanism (30) is disposed rearward of an intermediate position of the fuel tank (20) in a front-rear direction of the fuel tank (20) with regard to the front-rear direction of the vehicle, and the electric component (50) is disposed outside the housing box (10).

2. The straddled vehicle (1) according to claim 1, **characterized in that** the fuel tank (20) has a filler opening (23) that is open upward with regard to the up-down direction of the vehicle,
the tank cover (40) has a cover opening (43) located above the filler opening (23) with regard to the up-down direction of the vehicle, and
the tank cover (40) has a partition wall (46) disposed between the cover opening (43) and the electric component (50) and projecting upward with regard to the up-down direction of the vehicle.

3. The straddled vehicle (1) according to claim 2, **characterized in that** the electric component (50) is disposed rearward of the filler opening (23) with regard to the front-rear direction of the vehicle.

4. The straddled vehicle (1) according to claim 2, **characterized in that** the electric component (50) is disposed leftward or rightward of the filler opening (23) with regard to a left-right direction of the vehicle.

5. The straddled vehicle (1) according to any one of claims 1 to 4, **characterized in that** the electric component (50) overlaps the fuel tank (20) in a vehicle plan view.

6. The straddled vehicle (1) according to any one of claims 1 to 5, **characterized in that** a lower end of the electric component (50) is located below an upper end of the fuel tank (20) with regard to the up-down direction of the vehicle.

7. The straddled vehicle (1) according to any one of claims 1 to 6, further comprising:
a cross member (61) disposed above a portion of the fuel tank (20) with regard to the up-down direction of the vehicle and extending in the left-right direction of the vehicle, wherein
the seat lock mechanism (30) is disposed rearward of a front end of the cross member (61) with regard to the front-rear direction of the vehicle, and
the electric component (50) is disposed above the cross member (61) with regard to the up-down direction of the vehicle.

8. The straddled vehicle (1) according to claim 7, **characterized in that** the electric component (50) overlaps the cross member (61) in the vehicle plan view.

9. The straddled vehicle (1) according to any one of claims 1 to 8, **characterized in that** the electric component (50) is a communication unit communicable with a mobile terminal wirelessly.

10. The straddled vehicle (1) according to any one of claims 1 to 9, further comprising:
an electric component cover (55) equipped with the electric component (50), wherein the tank cover (40) has a fitting portion (45) in which the electric component cover (55) is detachably fitted.

11. The straddled vehicle (1) according to claim 10, **characterized in that** the electric component (50) is provided with a two-dimensional code (51), and
the electric component cover (55) has a hole (55a) surrounding at least a portion of a periphery of the two-dimensional code (51).

12. The straddled vehicle (1) according to any one of claims 1 to 11, **characterized in that** the housing box (10) overlaps the internal combustion engine (4) in the vehicle plan view.

13. The straddled vehicle (1) according to any one of claims 1 to 12, **characterized in that** the seat (2) overlaps the housing box (10) and the fuel tank (20) in the vehicle plan view.

14. The straddled vehicle (1) according to any one of claims 1 to 13, **characterized in that** the vehicle comprises a rear wheel (6) and the fuel tank (20) overlaps the rear wheel (6) in the vehicle plan view.

## Patentansprüche

1. Ein Spreiz-Sitz-Fahrzeug (1), das umfasst:
einen Verbrennungsmotor (4);
einen Gehäusekasten (10), der oberhalb des Verbrennungsmotors (4) in Bezug auf eine Auf-Ab-Richtung des Fahrzeugs angeordnet ist;
einen Kraftstofftank (20), der hinter dem Gehäusekasten (10) in Bezug auf eine Vorder-Rück-Richtung des Fahrzeugs angeordnet ist;
einen Sitz (2), der einen vorderen Endabschnitt in Bezug auf die Vorder-Rück-Richtung des Fahrzeugs hat und oberhalb des Gehäusekastens (10) und des Kraftstofftanks (20) in Bezug auf die Auf-Ab-Richtung des Fahrzeugs angeordnet ist;
ein Scharnier (8), das mit dem vorderen Endabschnitt des Sitzes (2) verbunden ist und den Sitz (2) lagert, so dass der Sitz (2) zwischen einer geschlossenen Position, in der sich der Sitz (2) in Bezug auf die Vorder-Rück-Richtung des Fahrzeugs nach hinten erstreckt, und einer offenen Position, in der sich der Sitz (2) nach oben in Bezug auf die Auf-Ab-Richtung des Fahrzeugs erstreckt, drehbar ist;
einen Sitzverriegelungsmechanismus (30), der konfiguriert ist, um den Sitz (2) in der geschlossenen Position zu verriegeln;
eine Tankabdeckung (40), die unter dem Sitz (2) und oberhalb des Kraftstofftanks (20), in Bezug auf die Auf-Ab-Richtung des Fahrzeugs, angeordnet ist; und
eine Elektro-Komponente (50), die unterhalb des Sitzes (2), in Bezug auf die Auf-Ab-Richtung des Fahrzeugs, angeordnet ist und durch die Tankabdeckung (40) gelagert ist, wobei
die Elektro-Komponente (50) hinter einem vorderen Ende des Kraftstofftanks (20), in Bezug auf die Vorder-Rück-Richtung des Fahrzeugs, angeordnet ist, und
zumindest ein Teil der Elektro-Komponente (50) vor oder hinter dem Sitzverriegelungsmechanismus (30), in Bezug auf die Vorder-Rück-Richtung des Fahrzeugs, angeordnet ist, **dadurch gekennzeichnet, dass** der Sitzverriegelungsmechanismus (30) hinter einer Zwischenposition des Kraftstofftanks (20) in einer Vorder-Rück-Richtung des Kraftstofftanks (20) in Bezug auf die Vorder-Rück-Richtung des Fahrzeugs angeordnet ist und die Elektro-Komponente (50) außerhalb des Gehäusekastens (10) angeordnet ist.

2. Das Spreiz-Sitz-Fahrzeug (1) gemäß Anspruch 1, **dadurch gekennzeichnet, dass** der Kraftstofftank (20) eine Einfüllöffnung (23) hat, die nach oben, in Bezug auf die Auf-Ab-Richtung des Fahrzeugs, offen ist,
die Tankabdeckung (40) eine Abdeckungsöffnung (43) hat, die sich oberhalb der Einfüllöffnung (23), in Bezug auf die Auf-Ab-Richtung des Fahrzeugs, befindet, und
die Tankabdeckung (40) eine Trennwand (46) hat, die zwischen der Abdeckungsöffnung (43) und der Elektro-Komponente (50) angeordnet ist und nach oben, in Bezug auf die Auf-Ab-Richtung des Fahrzeugs, vorsteht.

3. Das Spreiz-Sitz-Fahrzeug (1) gemäß Anspruch 2, **dadurch gekennzeichnet, dass** die Elektro-Komponente (50) hinter der Einfüllöffnung (23), in Bezug auf die Vorder-Rück-Richtung des Fahrzeugs, angeordnet ist.

4. Das Spreiz-Sitz-Fahrzeug (1) gemäß Anspruch 2, **dadurch gekennzeichnet, dass** die Elektro-Komponente (50) links oder rechts von der Einfüllöffnung (23), in Bezug auf eine Links-Rechts-Richtung des Fahrzeugs, angeordnet ist.

5. Das Spreiz-Sitz-Fahrzeug (1) gemäß irgendeinem der Ansprüche 1 bis 4, **dadurch gekennzeichnet, dass** die Elektro-Komponente (50) in der Draufsicht auf das Fahrzeug den Kraftstofftank (20) überlappt.

6. Das Spreiz-Sitz-Fahrzeug (1) gemäß irgendeinem der Ansprüche 1 bis 5, **dadurch gekennzeichnet, dass** ein unteres Ende der Elektro-Komponente (50) unterhalb eines oberen Endes des Kraftstofftanks (20), in Bezug auf die Auf-Ab-Richtung des Fahrzeugs, angeordnet ist.

7. Das Spreiz-Sitz-Fahrzeug (1) gemäß irgendeinem der Ansprüche 1 bis 6, das weiter umfasst:
ein Querelement (61), das oberhalb eines Abschnitts des Kraftstofftanks (20), in Bezug auf die Auf-Ab-Richtung des Fahrzeugs, angeordnet ist und sich in der Links-Rechts-Richtung des Fahrzeugs erstreckt, wobei
der Sitzverriegelungsmechanismus (30) hinter einem vorderen Ende des Querelements (61), in Bezug auf die Vorder-Rück-Richtung des Fahrzeugs, angeordnet ist, und
die Elektro-Komponente (50) oberhalb des Querelements (61), in Bezug auf die Auf- und Abwärtsrichtung des Fahrzeugs, angeordnet ist.

8. Das Spreiz-Sitz-Fahrzeug (1) gemäß Anspruch 7, **dadurch gekennzeichnet, dass** die Elektro-Komponente (50) den Querelement (61) in der Draufsicht auf das Fahrzeug überlappt.

9. Das Spreiz-Sitz-Fahrzeug (1) gemäß irgendeinem der Ansprüche 1 bis 8, **dadurch gekennzeichnet, dass** die Elektro-Komponente (50) eine Kommunikationseinheit ist, die drahtlos mit einem mobilen Endgerät kommunizieren kann.

10. Das Spreiz-Sitz-Fahrzeug (1) gemäß irgendeinem der Ansprüche 1 bis 9, das weiter umfasst:
eine Elektro-Komponentenabdeckung (55), die mit dem Elektro-Komponente (50) ausgestattet ist, wobei
die Tankabdeckung (40) einen Montageabschnitt (45) hat, in den die Elektro-Komponentenabdeckung (55) abnehmbar eingesetzt wird.

11. Das Spreiz-Sitz-Fahrzeug (1) gemäß Anspruch 10, **dadurch gekennzeichnet, dass** die Elektro-Komponente (50) mit einem zweidimensionalen Code (51) vorgesehen ist, und
die Elektro-Komponentenabdeckung (55) ein Loch (55a) hat, das zumindest einen Teil des Umfangs des zweidimensionalen Codes (51) umgibt.

12. Das Spreiz-Sitz-Fahrzeug (1) gemäß irgendeinem der Ansprüche 1 bis 11, **dadurch gekennzeichnet, dass** der Gehäusekasten (10) den Verbrennungsmotor (4) in der Draufsicht auf das Fahrzeug überlappt.

13. Das Spreiz-Sitz-Fahrzeug (1) gemäß irgendeinem der Ansprüche 1 bis 12, **dadurch gekennzeichnet, dass** der Sitz (2) den Gehäusekasten (10) und den Kraftstofftank (20), in der Draufsicht auf das Fahrzeug, überlappt.

14. Das Spreiz-Sitz-Fahrzeug (1) gemäß irgendeinem der Ansprüche 1 bis 13, **dadurch gekennzeichnet, dass** das Fahrzeug ein Hinterrad (6) aufweist und der Kraftstofftank (20) das Hinterrad (6), in der Draufsicht auf das Fahrzeug, überlappt.

## Revendications

1. Véhicule à selle (1) comprenant :
un moteur à combustion interne (4) ;
un boîtier (10) disposé au-dessus du moteur à combustion interne (4) dans le sens de la montée et de la descente du véhicule ;
un réservoir de carburant (20) situé à l'arrière du boîtier (10) par rapport à la direction avant-arrière du véhicule ;
un siège (2) ayant une partie avant dans le sens avant-arrière du véhicule et disposé au-dessus du boîtier (10) et du réservoir de carburant (20) dans le sens haut-bas du véhicule ;
une charnière (8) reliée à la partie avant du siège (2) et supportant le siège (2) de manière à ce que le siège (2) puisse pivoter entre une position fermée dans laquelle le siège (2) s'étend vers l'arrière par rapport à la direction avant-arrière du véhicule et une position ouverte dans laquelle le siège (2) s'étend vers le haut par rapport à la direction haut-bas du véhicule ;
un mécanisme de verrouillage du siège (30) configuré pour verrouiller le siège (2) en position fermée ;
un couvercle de réservoir (40) disposé sous le siège (2) et au-dessus du réservoir de carburant (20) dans le sens de la montée et de la descente du véhicule ; et
un composant électrique (50) disposé sous le siège (2) dans le sens de la montée et de la descente du véhicule et soutenu par le couvercle du réservoir (40), dans lequel
le composant électrique (50) est disposé à l'arrière de l'extrémité avant du réservoir de carburant (20) par rapport à la direction avant-arrière du véhicule, et
au moins une partie du composant électrique (50) est située à l'avant ou à l'arrière du mécanisme de verrouillage du siège (30) par rapport à la direction avant-arrière du véhicule,
**caractérisé en ce que** le mécanisme de verrouillage du siège (30) est disposé à l'arrière d'une position intermédiaire du réservoir de carburant (20) dans une direction avant-arrière du réservoir de carburant (20) par rapport à la direction avant-arrière du véhicule, et le composant électrique (50) est disposé à l'extérieur de la boîte de logement (10).

2. Véhicule à selle (1) selon la revendication 1, **caractérisé par le fait que** le réservoir de carburant (20) a une ouverture de remplissage (23) qui est ouverte vers le haut par rapport à la direction ascendante descendante du véhicule,
le couvercle du réservoir (40) a une ouverture de couvercle (43) située au-dessus de l'ouverture de remplissage (23) par rapport à la direction ascendante descendante du véhicule, et
le couvercle du réservoir (40) comporte une paroi de séparation (46) disposée entre l'ouverture du couvercle (43) et le composant électrique (50) et faisant saillie vers le haut par rapport à la direction de montée et de descente du véhicule.

3. Véhicule à selle (1) selon la revendication 2, **caractérisé par le fait que** le composant électrique (50) est disposé à l'arrière de l'ouverture de remplissage (23) par rapport à la direction avant-arrière du véhicule.

4. Véhicule à selle (1) selon la revendication 2, **caractérisé par le fait que** le composant électrique (50) est disposé à gauche ou à droite de l'ouverture de remplissage (23) par rapport à la direction gauche-droite du véhicule.

5. Véhicule à selle (1) selon l'une des revendications 1 à 4, **caractérisé par le fait que** le composant électrique (50) chevauche le réservoir de carburant (20) dans une vue en plan du véhicule.

6. Véhicule à selle (1) selon l'une quelconque des revendications 1 à 5, **caractérisé en ce qu'**une extrémité inférieure du composant électrique (50) est située en dessous d'une extrémité supérieure du réservoir de carburant (20) par rapport à la direction haut-bas du véhicule.

7. Véhicule à selle (1) selon l'une quelconque des revendications 1 à 6, comprenant en outre :
une traverse (61) disposée au-dessus d'une partie du réservoir de carburant (20) par rapport à la direction haut-bas du véhicule et s'étendant dans la direction gauche-droite du véhicule,
dans lequel
le mécanisme de verrouillage du siège (30) est disposé à l'arrière d'une extrémité avant de la traverse (61) par rapport à la direction avant-arrière du véhicule, et
le composant électrique (50) est disposé au-dessus de la traverse (61) dans le sens de la montée et de la descente du véhicule.

8. Véhicule à selle (1) selon la revendication 7, **caractérisé par le fait que** le composant électrique (50) chevauche la traverse (61) dans la vue en plan du véhicule.

9. Véhicule à selle (1) selon l'une des revendications 1 à 8, **caractérisé par le fait que** le composant électrique (50) est une unité de communication pouvant communiquer sans fil avec un terminal mobile.

10. Véhicule à selle (1) selon l'une quelconque des revendications 1 à 9, comprenant en outre :
un couvercle de composant électrique (55) équipé du composant électrique (50), dans lequel le couvercle du réservoir (40) présente une partie de montage (45) dans laquelle le couvercle de composant électrique (55) est monté de manière amovible.

11. Véhicule à selle (1) selon la revendication 10, **caractérisé par le fait que** le composant électrique (50) est pourvu d'un code bidimensionnel (51), et
le couvercle du composant électrique (55) comporte un trou (55a) entourant au moins une partie de la périphérie du code bidimensionnel (51).

12. Véhicule à selle (1) selon l'une quelconque des revendications 1 à 11, **caractérisé par le fait que** le boîtier (10) recouvre le moteur à combustion interne (4) dans la vue en plan du véhicule.

13. Véhicule à selle (1) selon l'une quelconque des revendications 1 à 12, **caractérisé par le fait que** le siège (2) chevauche le boîtier (10) et le réservoir de carburant (20) dans la vue en plan du véhicule.

14. Véhicule à selle (1) selon l'une des revendications 1 à 13, **caractérisé par le fait que** le véhicule comprend une roue arrière (6) et que le réservoir de carburant (20) chevauche la roue arrière (6) dans la vue en plan du véhicule.
